# EUROPEAN PATENT SPECIFICATION

(11) **EP 2 969 380 B1**
(45) Date of publication and mention of the grant of the patent: **06.05.2020**
(21) Application number: 14777940.9
(22) Date of filing: 13.03.2014
(51) Int. Cl.: B23K 35/30, B23K 35/02, C22C 19/05, B23K 1/00, B23K 1/19, B23K 1/20, F01D 5/00, B23P 6/00, B23K 1/008, B23K 101/00, B23K 103/18

(54) **METHOD FOR BRAZING A RENE 80 SUPERALLOY SUBSTRATE**
VERFAHREN ZUM LÖTEN EINES RENE 80 SUPERLEGIERUNGSTEIL
PROCEDE DE BRASSAGE D'UN COMPOSANT EN SUPERALLIAGE RENE 80

(30) Priority: 14.03.2013 US 201361782260 P
(43) Date of publication of application: 20.01.2016
(73) Proprietor: Siemens Energy, Inc., Orlando, FL 32826 (US)
(72) Inventor: OZBAYSAL, Kazim, Charlotte, NC 28210 (US)
(74) Representative: Patentanwaltskanzlei WILHELM & BECK
(86) International application number: PCT/US2014/025354
(87) International publication number: WO 2014/197060

(56) References cited:
- EP-A2- 1 226 896
- WO-A2-2013/067341
- WO-A2-2014/021968
- US-A1- 2003 136 811
- US-A1- 2009 283 572

## Description

### FIELD OF THE INVENTION

This invention relates generally to the field of materials technology, and more particularly to the repair of superalloy materials with a brazing process.

### BACKGROUND OF THE INVENTION

It is recognized that the repair of superalloy materials is made difficult due to their susceptibility to weld solidification cracking and strain age cracking. The term "superalloy" is used herein as it is commonly used in the art; i.e., a highly corrosion and oxidation resistant alloy that exhibits excellent mechanical strength and resistance to creep at high temperatures. (http://en.wikipedia.org/wiki/Superalloy) Superalloys typically include a high nickel or cobalt content. Examples of superalloys include alloys sold under the trademarks and brand names Hastelloy, Inconel alloys (e.g. IN 738, IN 792, IN 939), Rene alloys (e.g. Rene N5, Rene 80, Rene 142), Haynes alloys, Mar M, CM 247, CM 247 LC, C263, 718, X-750, ECY 768, 282, X45, PWA 1483 and CMSX (e.g. CMSX-4) single crystal alloys.

Brazing processes are used to repair superalloy materials in some applications. While a braze joint is generally understood to be mechanically weaker than a weld joint and to have a lower acceptable operating temperature due to the relatively low melting temperature of the braze material, braze repairs may be acceptable in certain lower stress and/or lower temperature applications.

Typical braze materials using boron or silicon as the melting point depressant material are of limited value with superalloy substrate materials because they create deleterious phases which reduce the ductility of the joint and repaired region. Boron and silicon free braze alloys incorporating hafnium and/or zirconium have been developed for which mechanical properties of up to 80% of the base superalloy properties are claimed. However, such materials tend to form carbides at the braze joint. Thus, further improvements in the brazing of superalloy materials are desired.

EP 1 226 896 A2 discloses a method for brazing a superalloy substrate with the features of the first part of claim 1 and a method for repairing a superalloy gas turbine component with the features of the first part of claim 9. Further prior art is disclosed by US 2003/136811 A1 and US 2009/283572 A1

### SUMMARY OF THE INVENTION

An improved method for brazing RENE 80 as a superalloy substrate is disclosed by claim 1. Preferred embodiments are disclosed in the subclaims.

### BRIEF DESCRIPTION OF THE DRAWINGS

The invention is explained in the following description in view of the drawings that show:
FIG. 1 is a side sectional view of a gas turbine vane wherein a large gap discontinuity is being repaired by brazing.
FIG. 2 is a side section view of a gas turbine vane wherein a narrow gap discontinuity being repaired by brazing.

### DETAILED DESCRIPTION OF THE INVENTION

The present inventor has developed several boron and silicon free braze alloys utilizing titanium as a melting point depressant material, including those disclosed in co- pending United States patent application numbers 13/467,402 filed 09 May 2012 (attorney docket number 2011P24893US) and 13/495,223 filed 13 June 2012 (attorney docket number 2011P25126US01). Additional boron and silicon free braze alloys particularly useful for the repair of superalloy substrate materials are disclosed herein, including alloys that advantageously have a reduced melting temperature range when compared to prior art hafnium-based braze alloys. Embodiments of the disclosed braze compositions are selected to include only elements that are present in superalloys to be repaired so that homogenization of the braze joint does not introduce any different element into the superalloy material matrix. The present alloys provide brazed joints having mechanical properties sufficiently close to (e.g. more than 80% of) the repaired substrate material properties such that the repair can be considered a structural repair and can be used in relatively high stressed regions of the component.

The present inventor has developed ternary and multicomponent braze alloys that exhibit respective melting temperature ranges (also called a freezing temperature ranges in the art) that are as low as no more than 10 °C., or in other embodiments no more than 15 °C., or no more than 20 °C. or no more than 50 °C. The term "melting temperature range" as used herein means the difference between the liquidus temperature (100% of the material is liquid) and the solidus temperature (100% of the material is solid). Typical known hafnium-based braze alloys exhibit substantially wider melting temperature ranges - see for example Table 2 of United States Patent Application Publication No. US 2009/0159645 A1, which discloses alloys having melting temperature ranges no lower than 70 °C (126 °F) to as much as 176 °C (317 °F). The present inventor has found that the narrow melting temperature ranges of his alloys facilitate component repair when using the alloys to braze during a solution heat treatment of a superalloy substrate. A narrow melting temperature range provides improved control of the fluidity of the braze material, resulting in more complete venting of solvents, water and organics prior to liquidity of the braze material, a reduced tendency to entrap vented gas within the braze material, improved penetration of substrate cracks and spaces between fill alloy powder particles, and less erosion of the substrate material due to a reduced time of liquidity.

Braze alloys are disclosed herein that are particularly useful for repairing superalloys, including Rene 80 superalloy material, for example when repairing a gas turbine engine blade or vane that has been found to have service-induced cracks on its platform or airfoil section. Rene 80 components present a particular challenge because they may be solution heat treated at 1,215 °C., which is lower than some other alloys, such as Alloy 247 components which may be solution heat treated at 1,235 °C. Alloys disclosed below may be formulated to have liquidus and solidus temperatures and melting temperature ranges that can be tailored to work cooperatively with a solution heat treatment temperature regiment for the particular superalloy material of the component to accomplish a braze and to fuse and to homogenization the braze joint during solution heat treatment. Such braze materials are selected to have melting temperature ranges inclusive of or below the solution heat treating temperature (i.e. the peak hold temperature used during the regiment) for particular superalloy substrate materials of interest. The homogenization and solidification of the braze joint advantageously does not introduce any new elemental constituent into the superalloy substrate material that was not already present in that material.

A ternary alloy for such applications part of the present invention has compositions within the following ranges (all compositions disclosed herein are in units of wt. %):
Cr 15-25%;
Ti 15-25%;
balance Ni.

Particular braze alloys within this group may have the following compositions: Cr 16.3%, Ti 21.2%, balance Ni; or Cr 17.2%, Ti 20.9%, balance Ni. These particular braze alloy compositions exhibit a solidus temperature of about 1,205 °C. and a liquidus temperature of about 1,215 °C., and thus a melting temperature range of only 10 °C. As such, they may be particularly useful when brazing to Alloy 247 or Rene 80. Another braze alloy within this group has the following composition: Cr 20%, Ti 20%, Ni 60%.

Other braze alloys, not part of the present invention, may have compositions within the following ranges:
Cr 12-16%;
Ti 13-16%;
Al 0-2.5%;
Co 2-4%;
W 3-5%;
Mo 0-2%;
Ta 0-2%;
balance Ni.

A particular braze alloy within this group, not part of the present invention, may have the following composition: Cr 14.1%, Ti 14%, Al 2.1%, Co 3.1%, W 4.1%, Mo 1%, Ta 1%, balance Ni. This particular braze alloy composition may be particularly useful when brazing to Alloy 247.

Other braze alloys, not part of the present invention, may have compositions within the following ranges:
Cr 15-18%;
Ti 10-15%;
Al 0-2.5%;
Co 2-4%;
W 3-5%;
Mo 0-2%;
Ta 0-2%;
balance Ni.

A particular braze alloy within this group, not part of the present invention, may have the following composition: Cr 17.57%, Ti 13.54%, Al 2.39%, Co 3.24%, W 3.47%, Mo 1.15%, Ta 0.83%, balance Ni. This particular braze alloy composition exhibits a solidus temperature of about 1,205 °C. and a liquidus temperature of about 1,220 °C., and thus a melting temperature range of only 15 °C. As such, it may be particularly useful when brazing to Alloy 247 or Rene 80.

Other braze alloys, not part of the present invention, may have compositions within the following ranges:
Cr 15-19%;
Ti 8-10%;
Al 0-2.5%;
Co 14-18%;
Mo 12-16%;
balance Ni.

A particular braze alloy within this group, not part of the present invention, may have the following composition: Cr 15.12%, Ti 10%, Al 2.12%, Co 15.8%, Mo 12.97%, balance Ni. This particular braze alloy composition exhibits a solidus temperature of about 1,205 °C. and a liquidus temperature of about 1,223 °C., and thus a melting temperature range of only 18 °C. As such, it may be particularly useful when brazing to Alloy 247 or IN 939.

A typical solution heat treatment effective to homogenize a braze joint of such alloys may be:
- heat the assembly to 1,472 °F (800 °C) at 15 - 30 °F (8.3 - 16.6 °C) per minute;
- hold at 1,472 °F for 20 minutes;
- heat to 2,125 °F (1,163 °C) at 15 - 30 °F per minute;
- hold at 2,125 °F for 20 minutes;
- heat to 2,192 - 2,282 °F (1,200 - 1,250 °C) at 1 - 30 °F (0.6 - 16.6 °C) per minute;
- hold at 2,192 - 2,282 °F for 2 - 12 hours;
- furnace cool to 2,120 - 2,192 °F (1,160 - 1,200 °C);
- hold at 2,120 - 2,192 °F up to 20 minutes;
- argon cool to room temperature.

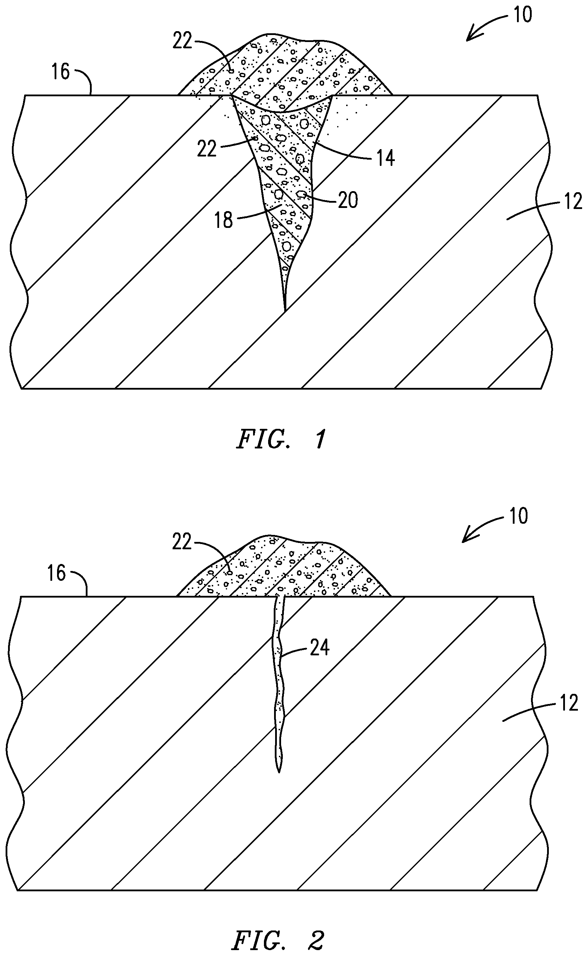

A repair process utilizing the alloys described above is illustrated in FIG. 1 where a gas turbine engine vane 10 formed of a superalloy substrate material 12 has a service-induced discontinuity14 extending into the substrate material 12 from its surface 16. In this embodiment, the discontinuity 14 is illustrated as a large gap crack having an opening of greater than 0.001 inches at surface 16. After being cleaned using any known process, crack 14 is filled with an alloy-containing powder 18, such as one containing a mixture of superalloy particles 20 and braze material particles 22. The braze particles 22 in the alloy-containing powder 18 may constitute 5-50% by weight of the powder 18. In other embodiments the alloy-containing powder 18 may be only superalloy particles 20. The mesh size range of the braze material particles 22 is preferably smaller (for example -325 mesh / +2 micron) than the superalloy particles 20 (for example -120 mesh / +2 micron) in order to provide enhanced filling of the discontinuity 14. A layer of the braze material particles 22 is disposed above the alloy-containing powder 18 to ensure a complete fill of the discontinuity during the brazing process. During a solution heat treatment of the substrate material 12, the braze material particles 22 melt and fill the discontinuity while the superalloy particles 20 sinter together. The titanium or other element contained in the braze material at a higher concentration than in the base superalloy then distributes into the surrounding superalloy material to achieve a solid homogenous joint. Advantageously, the braze material 22 contains no element that is not contained in the substrate 12 to be brazed so that no new element is introduced into the superalloy material, and the composition of the homogenized joint material is very similar to the substrate material 12, thus providing a structural joint. The very narrow melting temperature range of the braze material and subsequently reduced liquidity time also limits the erosion of the substrate material 12 during the brazing operation.

FIG. 2 illustrates a different region of the substrate material 12 wherein a narrow gap discontinuity 24 (less than 0.001 inches) is repaired using only braze material particles 22. Since the width of the discontinuity 24 is limited, there is no need for filling the discontinuity with superalloy particles 20 as in FIG. 1, as the braze material 22 will flow into and fill the discontinuity during the solution heat treatment.

In other embodiments the braze alloys disclosed herein may be formed as a foil or a wire and may be applied with any known process. Repair of a superalloy material surface containing a plurality of discontinuities may be accomplished by optionally filling the discontinuities with superalloy particles (as desired for wider openings), then conducting a heat treatment of the superalloy with a foil of one of the disclosed titanium-based braze alloys disposed over the surface, causing the braze material to melt, to flow into the discontinuities and to fill around the superalloy particles, then to homogenize and to solidify as the melting temperature element diffuses into the substrate 12.

While various embodiments of the present invention have been shown and described herein, it will be obvious that such embodiments are provided by way of example only. Numerous variations, changes and substitutions may be made without departing from the invention herein, as defined in the appended claims.

## Claims

1. A method for brazing Rene 80 as a superalloy substrate comprising: applying a braze material to a superalloy substrate, the braze material comprising only elemental constituents that are present in the superalloy substrate further comprising a composition having a melting temperature range of no more than 50 °C and inclusive of or below a solution heat treating temperature of the superalloy substrate; and performing a solution heat treatment of the superalloy substrate effective to the braze material and to fuse and homogenize a braze joint,
**characterized in that**
the braze material is free of boron and silicon and has a composition of Cr 15-25%; Ti 15-25%; balance Ni, wherein the braze material composition is selected to have a liquidus temperature of about 1,215 °C and a melting temperature range of no more than 10 °C, wherein the melting temperature range means the difference between the liquidus temperature and the solidus temperature.

2. The method of claim 1, further comprising applying the braze material having a composition of any of Cr 16,3%; Ti 21,2%; balance Ni; Cr 17,2%; Ti 20,9%; balance Ni and Cr 20%; Ti 20%; Ni 60%.

3. The method of claim 1 or 2, further comprising applying the braze material powder into a discontinuity an a surface of the superalloy substrate so that the braze joint fills the discontinuity.

4. The method of claim 3, further comprising applying a superalloy powder material into the discontinuity with the braze material.

5. The method of claim 4, further comprising selecting a mesh size range the braze material powder to be smaller than a mesh size range of the superalloy powder material.

6. The method of any of claims 1 to 5 used for repairing a superalloy gas turbine component.

## Patentansprüche

1. Verfahren zum Hartlöten von Rene 80 als ein Superlegierungssubstrat umfassend: Aufbringen eines Hartlotmaterials auf ein Superlegierungssubstrat, wobei das Hartlotmaterial nur elementare Bestandteile umfasst, die in dem Superlegierungssubstrat vorliegen, weiterhin umfassend eine Zusammensetzung mit einem Schmelztemperaturbereich von nicht über 50°C und einschließlich von oder unter einer Lösungswärmebehandlungstemperatur des Superlegierungssubstrats; und Durchführen einer Lösungswärmebehandlung des Superlegierungssubstrats, effektiv für das Hartlotmaterial und zum Verschmelzen und Homogenisieren einer Hartlotstelle,
**dadurch gekennzeichnet, dass**
das Hartlotmaterial frei von Bor und Silizium ist und eine Zusammensetzung von Cr 15-25%; Ti 15-25%; Rest Ni, aufweist, wobei die Hartlotmaterialzusammensetzung so ausgewählt ist, dass sie eine Liquidustemperatur von etwa 1215°C und einen Schmelztemperaturbereich von nicht mehr als 10°C aufweist, wobei der Schmelztemperaturbereich die Differenz zwischen der Liquidustemperatur und der Solidustemperatur bedeutet.

2. Verfahren nach Anspruch 1, weiterhin umfassend das Aufbringen des Hartlotmaterials mit einer Zusammensetzung einer beliebigen von Cr 16,3%; Ti 21,2%; Rest Ni; Cr 17,2%; Ti 20,9%; Rest Ni und Cr 20%; Ti 20%; Ni 60%.

3. Verfahren nach Anspruch 1 oder 2, weiterhin umfassend das Aufbringen des Hartlotmaterialpulvers in eine Diskontinuität auf einer Oberfläche des Superlegierungssubstrats, so dass die Lotstelle die Diskontinuität füllt.

4. Verfahren nach Anspruch 3, weiterhin umfassend das Aufbringen eines Superlegierungspulvermaterials in die Diskontinuität mit dem Hartlotmaterial.

5. Verfahren nach Anspruch 4, weiterhin umfassend das Wählen eines Gittergrößenbereichs des Hartlotmaterialpulvers, kleiner als ein Gittergrößenbereich des Superlegierungspulvermaterials zu sein.

6. Verfahren nach einem der Ansprüche 1 bis 5, verwendet zum Reparieren einer Superlegierungsgasturbinenkomponente.

## Revendications

1. Procédé de brasage de Rene 80 servant de substrat en superalliage comprenant : l'application d'un matériau de brasage à un substrat en superalliage, le matériau de brasage comprenant uniquement des constituants élémentaires qui sont présents dans le substrat en superalliage, comprenant en outre une composition ayant une gamme de température de fusion ne dépassant pas 50 °C et égale ou inférieure à une température de traitement thermique en solution du substrat en superalliage ; et la réalisation d'un traitement thermique en solution du substrat en superalliage efficace pour le matériau de brasage et pour faire fondre et homogénéiser un joint de brasure,
**caractérisé en ce que**
le matériau de brasage est dépourvu de bore et de silicium et a comme composition 15-25 % de Cr ; 15-25 % de Ti ; Ni pour le reste, la composition de matériau de brasage étant choisie pour avoir une température de liquidus d'environ 1215 °C et une gamme de température de fusion ne dépassant pas 10 °C, la gamme de température de fusion signifiant la différence entre la température de liquidus et la température de solidus.

2. Procédé de la revendication 1, comprenant en outre l'application du matériau de brasage ayant n'importe quelle composition parmi Cr 16,3 % ; Ti 21,2 % ; reste Ni, Cr 17,2 % ; Ti 20,9 % ; reste Ni, et Cr 20 % ; Ti 20 % ; Ni 60 %.

3. Procédé de la revendication 1 ou 2, comprenant en outre l'application de la poudre de matériau de brasage dans une discontinuité à une surface du substrat en superalliage de telle sorte que le joint de brasure remplisse la discontinuité.

4. Procédé de la revendication 3, comprenant en outre l'application d'un matériau de superalliage en poudre dans la discontinuité avec le matériau de brasage.

5. Procédé de la revendication 4, comprenant en outre la sélection d'une gamme d'ouverture de maille de la poudre de matériau de brasage pour qu'elle soit inférieure à une gamme d'ouverture de maille du matériau de superalliage en poudre.

6. Procédé de l'une quelconque des revendications 1 à 5 utilisé pour réparer un composant de turbine à gaz en superalliage.
